# FASCICULE DE BREVET EUROPEEN

(11) **EP 2 631 600 B1**
(45) Date de publication et mention de la délivrance du brevet: **01.02.2017**
(21) Numéro de dépôt: 13156018.7
(22) Date de dépôt: 20.02.2013
(51) Int. Cl.: G01D 4/00

(54) **Système de présentation de données issues d'un compteur électrique communiquant**
Präsentationssystem von Daten, die aus einem kommunizierenden elektrischen Zähler stammen
System for presenting data from a communicating electricity meter

(30) Priorité: 21.02.2012 FR 1251581
(43) Date de publication de la demande: 28.08.2013
(73) Titulaire: Electricité de France, 75008 Paris (FR)
(72) Inventeur: Illionnet, Vincent, 91700 VILLIERS SUR ORGE (FR); Chazottes, Benoît, 91190 GIF S/YVETTE (FR); Suignard, Philippe, 94150 RUNGIS (FR); Frejus, Myriam, 77240 Seine Port (FR)
(74) Mandataire: Regimbeau

(56) Documents cités:
- FR-A1- 2 944 635
- US-A1- 2011 098 867
- US-A1- 2011 254 697

## Description

### Domaine de l'invention

L'invention concerne la présentation de données issues d'un compteur électrique communiquant. Plus particulièrement, l'invention concerne la présentation à un client d'un réseau électrique de données issues de son compteur électrique communiquant.

### Etat de l'art

Un compteur électrique communiquant est un compteur qui est en mesure de réaliser des mesures automatiques de consommation et d'envoyer les résultats de ces mesures de façon automatisée.

Il existe des systèmes de récupération des données de compteur communiquant. Dans un exemple connu, le compteur communiquant est relié à un concentrateur situé dans un poste de transformation. Les informations du concentrateur sont communiquées, par exemple par GPRS, à un centre de supervision du réseau d'électricité qui est à même de fournir des informations de consommation au client du réseau d'électricité correspondant au compteur électrique.

Cependant, de tels systèmes fournissant des informations de consommation au client via une importante infrastructure amont du compteur impliquent un coût élevé tant pour leur mise en place que pour leur gestion quotidienne. De plus, l'information qui peut être fournie par de tels systèmes au client est limitée.

Ces systèmes impliquent un retard de l'information, qui doit passer par le réseau de distribution du fournisseur d'énergie avant de parvenir au client, lequel ne les reçoit que périodiquement.

Le document US 2011/254697 A1 concerne la collecte et la transmission de données.

### Présentation générale de l'invention

Un but de l'invention est de proposer un système de présentation de données issues d'un compteur électrique communiquant qui ne présente pas les inconvénients présentés ci-avant.

Un but de l'invention est en particulier de proposer un tel système aisé à installer et présentant de faibles coûts de fonctionnement.

Un but de l'invention est en outre de proposer un tel système permettant au client un meilleur suivi de sa consommation et/ou de sa production d'électricité.

A cet effet, il est prévu un système selon la revendication 1.

L'invention est avantageusement complétée par les caractéristiques suivantes, prises seules ou en une quelconque de leurs combinaisons techniquement possibles :
- le dispositif intermédiaire est alimenté électriquement via les moyens de connexion physique au compteur électrique communiquant,
- les moyens de connexion comprennent une connectique physique au format USB,
- les moyens de connexion comprennent un branchement filaire,
- les données horodatées et les données enrichies comprennent :
   o des données de puissance instantanée, et/ou d'une interpolation de la puissance instantanée en une unité homogène à une unité monétaire divisée par une unité de temps,
   o des données de consommation sur un intervalle de temps en une unité monétaire et/ou en une unité de mesure énergie,
   o des comparatifs de consommation selon plusieurs intervalles de temps,
- la communication locale sans fil entre le dispositif intermédiaire et le terminal mobile est réalisée par protocole Bluetooth ou Bluetooth Low Energy,
- la communication locale sans fil entre le dispositif intermédiaire et le terminal mobile est réalisée par protocole Wi-Fi ou Wi-Fi direct,
- le terminal mobile est un téléphone mobile ou une tablette numérique, comprend un écran et intègre une application logicielle configurée pour communiquer avec le dispositif intermédiaire et présenter des données issues du dispositif intermédiaire.

L'invention concerne en outre un procédé de présentation sur un terminal mobile de données issues d'un compteur électrique communiquant élaborant de données de consommation énergétique, comprenant des étapes de :
- requête de données à un dispositif intermédiaire d'un système de présentation de données issues d'un compteur électrique communiquant selon l'invention, par le terminal mobile du système,
- récupération par le processeur de données stockées par les moyens de stockage,
- transmission de données par la seconde interface de communication via une communication locale sans fil,
- affichage des données transmises sur le terminal mobile.

L'invention concerne en sus un procédé de mesure de données consommation électrique d'un appareil mis en oeuvre par un système de présentation de données issues d'un compteur électrique communiquant élaborant des données de consommation énergétique selon l'invention, comprenant des étapes de :
- envoi par le terminal mobile d'une requête de lancement d'une mesure de consommation électrique au dispositif intermédiaire,
- lancement par le dispositif intermédiaire d'une mesure de données de consommation électrique, les données mesurées étant horodatées par les moyens d'horodatage et stockées par les moyens de stockage,
- affichage sur le terminal mobile d'une requête d'activation de l'appareil,
- affichage sur le terminal mobile d'une requête d'extinction de l'appareil,
- envoi par le terminal mobile d'une requête de fin de mesure de la consommation électrique au dispositif intermédiaire,
- arrêt par le dispositif intermédiaire de la mesure de données de consommation électrique,
- calcul de la consommation électrique de l'appareil à partir des données de mesure horodatées et stockées.

L'invention concerne en outre un procédé d'obtention d'une consommation minimale permanente mis en oeuvre par un système de présentation de données issues d'un compteur électrique communiquant élaborant des données de consommation énergétique selon l'invention, comprenant des étapes de :
- calcul et horodatage par les moyens de traitement de données du dispositif intermédiaire de moyennes de la puissance apparente, chaque moyenne étant réalisée sur plusieurs points de mesure consécutifs correspondant à une première période temporelle,
- sélection par les moyens de traitement de données du dispositif intermédiaire de minima, chaque minimum étant sélectionné parmi des moyennes de la puissance apparente calculées et horodatées dont les premières périodes temporelles correspondantes sont comprises dans une deuxième période temporelle,
- obtention d'une consommation minimale permanente par calcul d'une moyenne des minima sélectionnés,
- affichage des données transmises sur le terminal mobile.

### Présentation des figures

D'autres caractéristiques et avantages de l'invention apparaitront lors de la description ci-après d'un mode de réalisation. Aux dessins annexés :

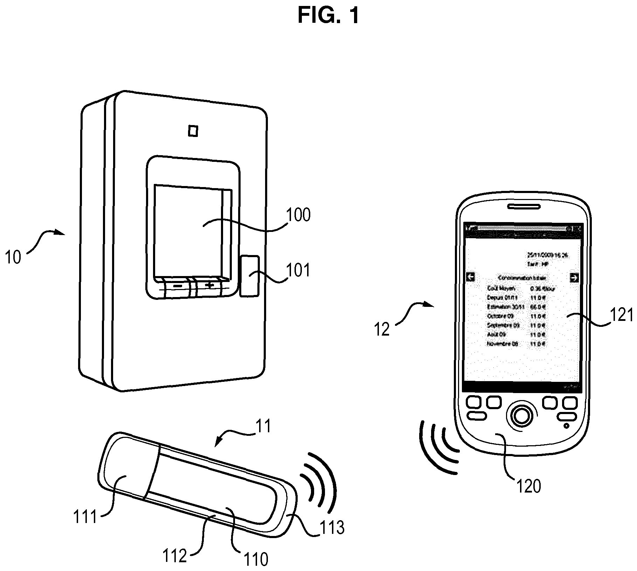

- la figure 1 représente un exemple de mode de réalisation de système selon l'invention,
- les figures 2a à 2d représentent des exemples d'affichages sur un terminal mobile selon un mode de réalisation de l'invention,
- la figure 3 représente schématiquement un exemple de mode de réalisation de procédé de présentation de données selon l'invention,
- la figure 4 représente schématiquement un exemple de mode de réalisation de procédé de mesure d'une consommation électrique d'un appareil selon l'invention,
- la figure 5 représente schématiquement un exemple de mode de réalisation de procédé d'obtention d'une consommation minimale permanente selon l'invention
- la figure 6 est un graphique illustrant l'exemple de mode de réalisation de procédé représenté sur la figure 5.

### Description de l'invention

### Exemple illustrant un mode de réalisation du système

### Compteur électrique communiquant

En référence aux figures, il est décrit un système de présentation de données issues d'un compteur 10 électrique communiquant élaborant des données de consommation énergétique.

Le compteur 10 électrique est par exemple un compteur Linky (marque enregistrée). Le compteur 10 électrique communiquant présente un terminal 100 permettant d'afficher des informations de consommation. Cependant ces informations sont limitées et il faut être au niveau du compteur 10 électrique communiquant pour les lire. Le compteur 10 électrique communiquant comprend en outre un branchement 101. Il peut s'agir d'une une connectique physique au format USB telle qu'une prise USB femelle ou d'une borne de branchement filaire.

Le système comprend un terminal mobile 12. Le terminal mobile 12 peut être un téléphone mobile, ou une tablette numérique.

### Dispositif intermédiaire

Le système comprend un dispositif intermédiaire 11. Le dispositif intermédiaire 11 comprend des moyens de connexion physique 111 au compteur 10 électrique communiquant. Les moyens de connexion physique 111 peuvent comprendre une connectique physique au format USB telle qu'une prise USB mâle ou un branchement filaire. Les moyens de connexion physique 111 sont connectés à un processeur.

Le dispositif intermédiaire 11 peut être alimenté électriquement via les moyens de connexion physique 111 au compteur 10 électrique communiquant. De cette manière, un dispositif intermédiaire 11 de petite taille peut être utilisé, sans batterie ni moyens d'alimentation dédiés. En outre un tel dispositif intermédiaire est aisé à installer car le seul branchement à effectuer est le branchement au compteur 10 électrique communiquant.

Le dispositif intermédiaire 11 comprend une première interface de communication configurée de manière à ce que le dispositif intermédiaire 11 récupère automatiquement via les moyens de connexion physique 111 les données du compteur 10 électrique communiquant à intervalles réguliers.

La première interface de communication peut être configurée de manière à ce que le dispositif intermédiaire 11 récupère automatiquement via les moyens de connexion physique 111 les données de consommation énergétique élaborées par le compteur 10 électrique communiquant. La première interface de communication peut être configurée pour récupérer toutes les données de consommation énergétiques émises par le compteur 10 électrique communiquant par le branchement 101.

Le dispositif intermédiaire 11 comprend des moyens d'horodatage desdites données. Ainsi aux données sont associées des informations concernant la date et l'heure de récupérations des données. Les moyens d'horodatage ont accès à des données temporelles par le biais des informations communiquées par le branchement 101 du compteur. Alternativement, des données temporelles peuvent être transmises par une horloge interne du dispositif intermédiaire. L'horloge interne peut présenter une pile bouton l'alimentation de l'horloge lorsque le dispositif intermédiaire est débranché.

Le dispositif intermédiaire comprend des moyens de stockage 112 des données horodatées. Les données récupérées automatiquement sont stockées par les moyens de stockage 112. Les moyens de stockage 112 peuvent être constitués d'une mémoire non volatile. Les moyens de stockage 112 peuvent être de type flash.

Le dispositif intermédiaire 11 comporte en outre des moyens de traitement de données de consommation énergétique configurés pour élaborer des données enrichies à partir des données horodatées. Les moyens de stockage 112 peuvent ainsi contenir des données correspondant à des informations plus riches que celles stockées dans le compteur 10 électrique communiquant et visibles au niveau du terminal 100. Le compteur Linky ne permet d'afficher que quelques informations valable uniquement au moment de la consultation telles que l'index de consommation cumulé en kilowattheures, la puissance apparente soutirée instantanée en voltampères, la puissance maximale soutirée de la journée en voltampères, l'intensité instantanée en ampères, les index totalisateurs pour l'énergie active soutirée, et des informations relatives à l'abonnement choisi. Le traitement des données permet d'obtenir des données plus riches relatives à une consommation infrahoraire, horaire, quotidienne, hebdomadaire, mensuelle et annuelle à différents moments. Par exemple peut être stockée l'énergie consommée chaque mois.

Les données peuvent subir un traitement consistant en des opérations mathématiques. Les moyens de traitement permettent d'obtenir une interpolation de la puissance instantanée en euros par heure. Les données stockées peuvent de même comprendre des données de consommation en euros ou en kilowattheures. Les données stockées peuvent en outre comprendre des comparatifs de consommation selon plusieurs des intervalles de temps.

Les données stockées peuvent comprendre une valeur actualisée d'index de consommation totale selon des périodes tarifaires. Les données correspondant à l'abonnement du client correspondant au compteur 10 peuvent être automatiquement obtenues à partir du compteur 10 ou préenregistrées dans le dispositif 11.

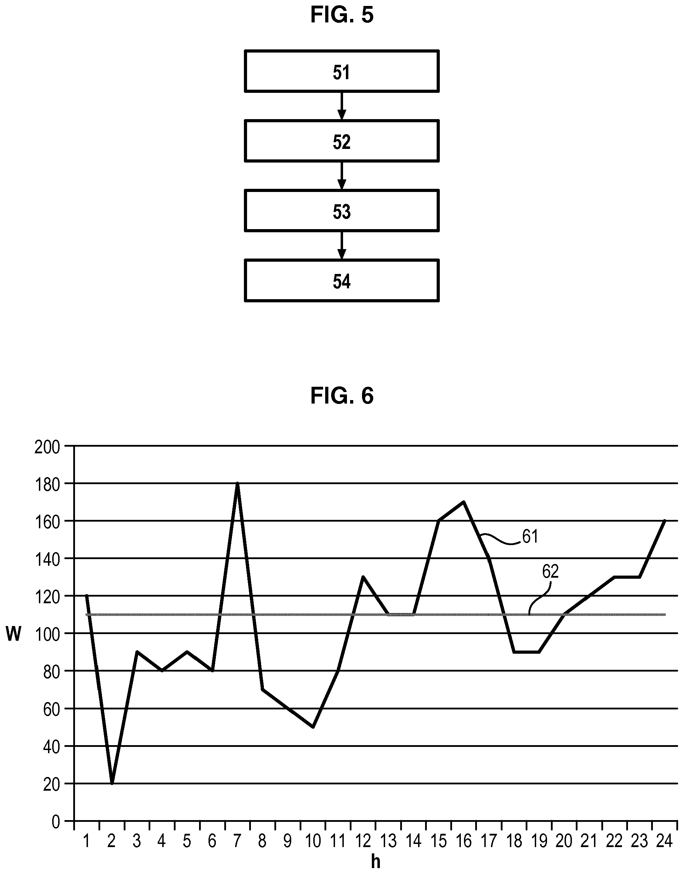

Les données stockées peuvent comprendre la consommation minimale permanente, encore appelée talon ou veille. Cette valeur est réactualisée en permanence et peut être calculée et stockée en kilowatt ou en euros. La figure 5 représentant un exemple de procédé de calcul du talon. La figure 6 est un graphique présentant une puissance en watts en fonction d'un temps en heures. La méthode comprend une première étape 51 de filtrage de la puissance apparente sur cinq points de mesures au pas incrémental d'actualisation des données par le compteur 10 électrique communiquant. Le filtrage peut consister en un calcul de moyenne. Dans l'exemple, si le pas incrémental d'actualisation est de deux secondes, le filtrage est réalisé sur dix secondes. Une deuxième étape 52 consiste à déterminer la valeur minimale de puissance apparente filtrée pour chaque heure. Le dispositif intermédiaire 11 stocke au moins les vingt-quatre dernières valeurs minimales horaires déterminées. Ces valeurs sont représentées reliées par la courbe 61 de la figure 6. Une troisième étape 53 consiste à obtenir le talon en calculant la moyenne des vingt-quatre dernières valeurs minimales horaires. Le talon est représenté par la courbe 62 de la figure 6. Dans une quatrième étape 54, les informations concernant le talon sont affichées sur le terminal mobile 12.

Le dispositif intermédiaire 11 permet de stocker des données et de produire des données enrichies qui ne sont pas fournies par le compteur 10 électrique communiquant. De manière équivalente, les données stockées peuvent être des données de consommation ou de production d'énergie.

Les moyens de stockage prennent par exemple la forme d'une base de données. Il peut s'agir d'une base de données relationnelle ou d'une base de données orientée objet. La base de données permet d'associer les données aux informations d'horodatage et de relier les données entre elles, par exemple les données relatives à la consommation de la journée ou du mois.

Des moyens de gestion de la base de données permettent d'optimiser l'espace des moyens de stockage 112 requis par la base de données. Des redondances apparaissent si d'une mesure à l'autre, les données stockées sont les mêmes. Les moyens de gestion peuvent effectuer une analyse des données pour supprimer les données redondantes.

Par ailleurs les moyens de gestion peuvent supprimer certaines données en fonction de leur ancienneté. Ainsi, pour une date donnée, plus la date est récente, plus il y a de données afférentes dans la base de données. Les moyens de gestion de données sont adaptés pour garder des informations sur toutes les périodes d'enregistrement. Par exemple les moyens de gestion ne supprimeront pas les données de consommation mensuelles.

Le dispositif intermédiaire 11 comprend une seconde interface de communication apte à mettre en oeuvre une communication locale sans fil avec le terminal mobile 12. La communication est mise en oeuvre via des moyens de communication locale sans fil 113 comprenant un émetteur-récepteur radio courte distance, fonctionnant par exemple par protocole Bluetooth, Bluetooth Low Energy (BLE, Bluetooth basse énergie en terminologie anglo-saxonne), Wi-Fi, Wi-Fi Low Power (Wi-Fi basse énergie en terminologie anglo-saxonne) ou Wi-Fi direct. Par Wi-Fi Low Power on entend une communication de type Wi-Fi optimisée pour les faibles transferts de données afin diminuer la consommation d'énergie propre à la communication par Wi-Fi. Une méthode possible consiste à envoyer des trames courtes. Par Wi-Fi direct on entend un protocole de transfert de données par Wi-Fi sans point d'accès intermédiaire. D'autres protocoles de transfert de données par communication locale sans fil sans point d'accès intermédiaire peuvent être utilisés.

Le processeur est configuré pour que le dispositif 11 transmette tout ou partie des données horodatées au terminal mobile 12 via la seconde interface de communication sur requête du terminal mobile 12. Le processeur est également configuré pour que le dispositif intermédiaire 11 transmette tout ou partie des données enrichies au terminal mobile 12.

Le dispositif intermédiaire 11 est adapté pour récupérer directement par les moyens de connexion physique 111 des données du compteur 10 électrique communiquant sur requête du terminal mobile 12.

Les moyens de communication 113 locale sans fil, de même que les autres éléments constituants du dispositif intermédiaire 11 sont choisis et dimensionnés en fonction de leur consommation d'énergie pour que l'alimentation fournie par le compteur 10 électrique communiquant soit suffisante pour permettre le fonctionnement du système, en particulier la récupération automatique des données par le dispositif intermédiaire 11, l'horodatage, le traitement et le stockage des données, et une communication locale sans fil entre le dispositif intermédiaire 11 et au moins un terminal mobile 12.

La première interface de communication, les moyens d'horodatage, le processeur et la seconde interface de communication du dispositif intermédiaire 11 sont disposés dans un boitier 110 qui les protège. Le boitier peut avoir une forme adaptée pour éviter tout débranchement involontaire ou toute détérioration involontaire. Ainsi le boitier peut avoir une forme qui épouse la surface du compteur ou qui s'étend peu dans la direction orthogonale à la surface du compteur 10 électrique communiquant. Dans le cas d'un une connectique physique au format USB, le boitier 110 peut s'étendre orthogonalement à la direction principale définie par le branchement de la connectique physique au format USB.

### Terminal mobile

Le terminal mobile 12 intègre une application logicielle configurée pour communiquer avec le dispositif intermédiaire 11 et présenter des données issues du dispositif intermédiaire 11. Il peut s'agir d'une application téléchargeable pour téléphone mobile ou tablette numérique. Le terminal mobile 12 est ainsi adapté pour repérer le dispositif intermédiaire 11 et à établir une connexion avec la seconde interface de communication, la connexion étant authentifiée par mot de passe et chiffrée selon une méthode de chiffrement implémentée par les moyens de communication. En complément ou alternativement, la connexion peut être chiffrée par une fonctionnalité logicielle supplémentaire. Le terminal mobile 12 récupère des données stockées, éventuellement des données enrichies stockées, par les moyens de stockage 112 du dispositif intermédiaire 11.

Le terminal mobile 12 peut envoyer des instructions au dispositif intermédiaire 11 pour obtenir certaines des données stockées, ou pour que le dispositif intermédiaire 11 réalise un traitement des données stockées avant de les envoyer au terminal mobile 12. Les requêtes de données du terminal mobile 12 au dispositif intermédiaire 11 dépendent des données à présenter par l'application logicielle sur l'écran 121 du terminal mobile 12 au moment de l'émission des requêtes, c'est-à-dire que les requêtes dépendent de l'écran de l'application logicielle sur lequel navigue le client. Le nombre et le contenu des requêtes sont ainsi limités, ce qui permet de limiter l'énergie nécessaire au fonctionnement du dispositif intermédiaire 11.

Par exemple, le terminal mobile 12 peut demander au dispositif intermédiaire 11 une comparaison entre une consommation actuelle et une moyenne de cette consommation. Il peut s'agir d'une comparaison entre la puissance instantanée actuelle et la moyenne de la puissance instantanée du mois précédent. Dans ce cas une possibilité est de comparer la dernière puissance instantanée stockée et un index de puissance consommée divisé par la période temporelle correspondante à l'index.

Le terminal mobile 12 peut demander au dispositif intermédiaire 11 des données correspondant à la consommation électrique du jour précédente en kilowattheures ou en euros, la consommation du jour depuis minuit en kilowattheures ou en euros, les consommations étant éventuellement ventilées en fonction des zones horaires.

Le terminal mobile 12 peut permettre de réaliser un procédé de mesure de la consommation électrique d'un appareil.

Le terminal mobile 12 peut demander au dispositif intermédiaire 11 de mesurer une consommation sur une durée déterminée, le terminal mobile 12 permettant d'envoyer une requête de début de lancement et d'arrêt de la mesure. Des opérations d'enrichissement des données correspondant à cette période peuvent être réalisées par le dispositif intermédiaire 11, par exemple en changeant la ou les zones horaires en vigueur sur la durée de la mesure. Cette mesure et les informations correspondantes peuvent être stockées par le dispositif intermédiaire 11 sur requête du terminal mobile 12. Il est possible d'adjoindre à ces données des informations telles que des annotations, des commentaires ou un nom sur requête du terminal mobile 12. De telles annotations peuvent être adjointes aux autres données stockées par le dispositif intermédiaire 11.

Le dispositif intermédiaire 11 peut temporairement stocker certaines données envoyées au terminal mobile 12 dans un espace dédié des moyens de stockage 112 afin de constituer une mémoire cache et de pouvoir transmettre ces données plus rapidement si le terminal mobile 12 envoie la même requête par la suite. En effet, certaines données telles que la consommation des mois précédents n'évolueront plus et quelles que soient les nouvelles données stockées dans le dispositif intermédiaire 11, une requête les concernant donnera toujours les mêmes résultats.

Le fait que le terminal mobile 12 soit en mesure de communiquer avec le dispositif intermédiaire 11 permet à ce dernier de gérer son alimentation électrique et son fonctionnement par rapport au nombre de terminaux mobiles 12 en communication et à leurs demandes respectives. De plus, un tel système assure une plus grande sécurité car le dispositif intermédiaire 11 peut ne pas envoyer d'information relative à la consommation ou à la production du client si un terminal mobile 12 ne lui en a pas fait la requête. Ceci permet en outre de diminuer la consommation électrique du dispositif intermédiaire 11.

De manière complémentaire, l'interface permet au terminal mobile 12 de réaliser des requêtes impliquant des informations provenant de sources extérieures au compteur 10. Par exemple, si le client désire connaître le coût de son installation électrique dans le cadre d'une autre tarification ou d'un profil de consommation différent, il peut télécharger via d'autres moyens de communication du terminal mobile 12, par exemple par GPRS ou par wifi, des informations de tarification ou des profils de consommation. Le terminal mobile 12 inclut ses informations dans une requête afin que le dispositif intermédiaire 11 traite les données stockées ou récupérées instantanément en utilisant les informations issues de la requête. Le dispositif intermédiaire 11 peut ainsi fournir au terminal mobile 12 des comparaisons de coût de consommation en fonction des hypothèses de consommation fournies. Alternativement, le terminal mobile 12 peut réaliser le traitement des données issues des différents moyens de communication.

### Affichages sur terminal mobile

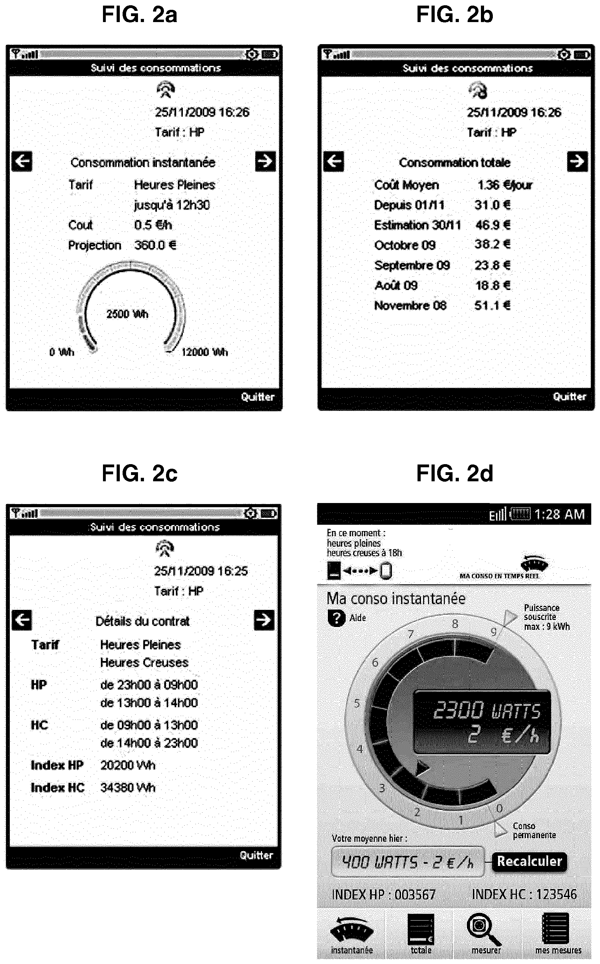

Les figures 2a, 2b et 2c représentent des exemples d'affichages sur le terminal mobile 12 d'une interface de communication avec le dispositif intermédiaire 11. Les trois affichages indiquent la date et l'heure ainsi que le tarif en cours.

L'affichage représenté sur la figure 2a présente des données relatives à la consommation instantanée, notamment l'heure de changement de tarification, le coût afférent à la période horaire actuelle, en l'occurrence « Heures pleines » et une projection établissant une estimation de la facture annuelle. L'affichage présente également sous la forme d'un compteur de vitesse la consommation instantanée en wattheures.

L'affichage représenté sur la figure 2b présente des informations relatives à la consommation totale, notamment le coût moyen quotidien des installations électriques, le coût cumulé depuis le début du mois, une estimation de la facture mensuelle et les coûts de consommation électrique des mois précédents.

L'affichage représenté sur la figure 2c présente des informations relatives au détail du contrat, notamment la tarification choisie, l'étendue des zones horaires afférentes et les index de consommation selon les zones horaires, ici « Heures pleines » et « Heures creuses ».

L'affichage représenté sur la figure 2d présente une alternative de l'affichage représenté sur la figure 2a. Sont de même présentées l'heure de changement de tarification, la période horaire actuelle, en l'occurrence « Heures pleines » et une projection établissant une estimation de la facture annuelle. L'affichage présente également sous la forme d'un compteur de vitesse la consommation instantanée en wattheures. Le compteur est limité par la puissance souscrite maximale. L'affichage présente en sus la consommation moyenne du jour précédent en watts d'une part et en euros par heure d'autre part, les index de consommation selon les zones horaires. Un bouton permet d'envoyer une requête pour recalculer les données affichées.

Le client peut ainsi consulter des informations sur sa consommation en temps réel sans avoir à se déplacer jusqu'au compteur 10.

Un tel système ne nécessite pas de suivi ni d'installation par le fournisseur d'énergie, ce qui réduit le coût pour le fournisseur et le client pour ce service à l'obtention du dispositif intermédiaire 11 et à l'installation de l'interface sur le terminal mobile 12.

### Exemple illustrant un mode de réalisation de procédé de présentation de données

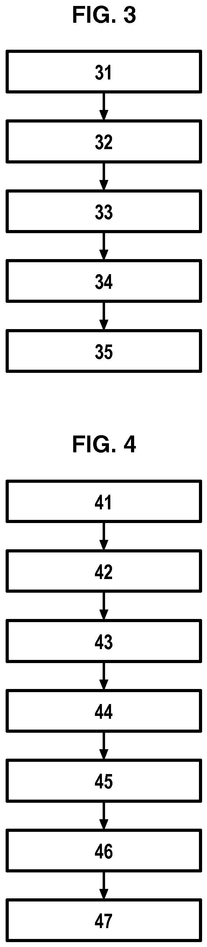

La figure 3 illustre schématiquement un exemple de procédé de présentation de données issues du compteur électrique 10 communiquant sur un terminal mobile 12 connecté au compteur 10.

Le procédé comprend une première étape 31 de requête de données au dispositif intermédiaire 11 par le terminal mobile 12. La requête est envoyée par l'application logicielle via les moyens de communication 130 locale sans fil du terminal mobile 12.

Le procédé comprend une deuxième étape 32 de récupération par le processeur de données stockées par les moyens de stockage 12. Les données peuvent être stockées par les moyens de stockage 112. Les données peuvent être traitées avant d'être envoyées.

Le procédé comprend une troisième étape 33 de traitement des données.

Le procédé comprend une quatrième étape 34 d'envoi des données par la seconde interface de communication, via une communication locale sans fil. L'envoi se fait par une connexion authentifiée par mot de passe et chiffrée au terminal mobile 12 identifié avec succès.

Le procédé comprend une cinquième étape 35 d'affichage des données transmises sur le terminal mobile 12.

### Exemple illustrant un mode de réalisation de procédé de mesure d'une consommation électrique d'un appareil

La figure 4 illustre un procédé de mesure d'une consommation électrique d'un appareil électrique branché à un circuit dont le compteur mesure la consommation.

Le procédé comprend une première étape 41 d'envoi par le terminal mobile 12 d'une requête de lancement d'une mesure de consommation électrique au dispositif intermédiaire 11. Subséquemment, le procédé comprend une deuxième étape 42 de lancement par le dispositif intermédiaire 11 d'une mesure de données de consommation électrique, les données mesurées étant horodatées par les moyens d'horodatage et stockées par les moyens de stockage 112. Le dispositif intermédiaire mesure des données de référence alors que l'appareil électrique n'est pas activé.

Le procédé comprend une troisième étape 43 d'affichage sur le terminal mobile 12 d'une requête d'activation de l'appareil. L'utilisateur est à ce moment informé qu'il doit immédiatement activer l'appareil électrique dont il veut mesurer la consommation. Une requête est également envoyée au dispositif intermédiaire 11 afin qu'il stocke de manière différente, par exemple dans une autre liste, les données récupérées après enregistrement de l'appareil. Le changement peut être réalisé immédiatement, après un temps de latence, ou par analyse *a posterori* par les moyens de traitement des données stockées afin de repérer l'activation de l'appareil électrique à partir de comparaisons des données stockées.

Le procédé comprend une quatrième étape 44 d'affichage sur le terminal mobile 12 d'une requête d'extinction de l'appareil. De même l'utilisateur est à ce moment informé qu'il doit immédiatement désactiver l'appareil électrique dont il veut mesurer la consommation. De même que dans le cadre de la troisième étape, une requête est envoyée au dispositif intermédiaire 11 afin qu'il différencie les données stockées avant et après la désactivation de l'appareil.

Le procédé comprend une cinquième étape 45 d'envoi par le terminal mobile 12 d'une requête de fin de mesure de la consommation électrique au dispositif intermédiaire 11. Subséquemment, le procédé comprend une sixième étape 46 d'arrêt par le dispositif intermédiaire 11 de la mesure de données de consommation électrique.

Le procédé comprend une septième étape 47 de calcul de la consommation électrique de l'appareil à partir des données de mesure horodatées et stockées. Le calcul est réalisé par comparaison des données mesurées alors que l'appareil est désactivé avec les données mesurées alors que l'appareil est activé. Pour éviter des effets d'interférence avec d'autres appareils électriques, par exemple l'activation automatique d'un réfrigérateur ou d'un climatiseur, les données de plusieurs mesures peuvent être agrégés et comparées.

## Revendications

1. Système de présentation de données issues d'un compteur (10) électrique communiquant élaborant des données de consommation énergétique, le système comprenant un terminal mobile (12) et un dispositif intermédiaire (11) comprenant des moyens de connexion physique (111) au compteur électrique communiquant et, disposés dans un boitier (110) :
- une première interface de communication configurée de manière à ce que le dispositif intermédiaire (11) récupère automatiquement via les moyens de connexion physique (111) les données de consommation énergétique élaborées par le compteur électrique (10) communiquant,
- des moyens d'horodatage desdites données,
- des moyens de stockage (112) desdites données horodatées,
- une seconde interface de communication apte à mettre en oeuvre une communication locale sans fil avec le terminal mobile (12),
- un processeur configuré pour que le dispositif (11) transmette tout ou partie des données horodatées au terminal mobile (12) via la seconde interface de communication sur requête du terminal mobile (12),
**caractérisé en ce que** le dispositif intermédiaire (11) comporte en outre des moyens de traitement de données de consommation énergétique configurés pour élaborer des données enrichies à partir des données horodatées, les données enrichies comprenant des données de consommation minimale permanente, le processeur étant également configuré pour que le dispositif intermédiaire (11) transmette tout ou partie des données enrichies au terminal mobile (12).

2. Système selon la revendication 1, **caractérisé en ce que** le dispositif intermédiaire (11) est alimenté électriquement via les moyens de connexion physique (111) au compteur (10) électrique communiquant.

3. Système selon l'une quelconque des revendications précédentes, **caractérisé en ce que** les moyens de connexion (111) comprennent une connectique physique au format USB.

4. Système selon l'une des revendications 1 ou 2, **caractérisé en ce que** les moyens de connexion (111) comprennent un branchement filaire.

5. Système selon l'une quelconque des revendications précédentes, dans lequel les données horodatées et les données enrichies comprennent :
- des données de puissance instantanée, et/ou d'une interpolation de la puissance instantanée en une unité homogène à une unité monétaire divisée par une unité de temps,
- des données de consommation sur un intervalle de temps en une unité monétaire et/ou en une unité de mesure énergie,
- des comparatifs de consommation selon plusieurs intervalles de temps.

6. Système selon l'une quelconque des revendications précédentes, dans lequel la communication locale sans fil entre le dispositif intermédiaire 11 et le terminal mobile 12 est réalisée par protocole Bluetooth ou Bluetooth Low Energy.

7. Système selon l'une quelconque des revendications précédentes, dans lequel la communication locale sans fil entre le dispositif intermédiaire 11 et le terminal mobile 12 est réalisée par protocole Wi-Fi ou Wi-Fi direct.

8. Système selon l'une quelconque des revendications précédentes, dans lequel le terminal mobile (12) est un téléphone mobile ou une tablette numérique, comprend un écran (121) et intègre une application logicielle configurée pour communiquer avec le dispositif intermédiaire (11) et présenter des données issues du dispositif intermédiaire (11).

9. Système selon la revendication précédente, dans lequel les requêtes de données du terminal mobile (12) au dispositif intermédiaire (11) dépendent des données à présenter par l'application logicielle sur l'écran (121) du terminal mobile (12) au moment de l'émission des requêtes.

10. Procédé de présentation sur un terminal mobile (12) de données issues d'un compteur (10) électrique communiquant élaborant de données de consommation énergétique, comprenant des étapes de :
- requête de données à un dispositif intermédiaire (11) d'un système selon l'une quelconque des revendications précédentes, par le terminal mobile (12),
- récupération par le processeur de données stockées par les moyens de stockage (112),
- transmission de données par la seconde interface de communication via une communication locale sans fil,
- affichage des données transmises sur le terminal mobile (12).

11. Procédé de mesure d'une consommation électrique d'un appareil mis en oeuvre par un système selon l'une quelconque des revendications 1 à 9, comprenant des étapes de :
- envoi (41) par le terminal mobile (12) d'une requête de lancement d'une mesure de consommation électrique au dispositif intermédiaire (11),
- lancement (42) par le dispositif intermédiaire (11) d'une mesure de données de consommation électrique, les données mesurées étant horodatées par les moyens d'horodatage et stockées par les moyens de stockage (112),
- affichage (43) sur le terminal mobile (12) d'une requête d'activation de l'appareil,
- affichage (44) sur le terminal mobile (12) d'une requête d'extinction de l'appareil,
- envoi (45) par le terminal mobile (12) d'une requête de fin de mesure de la consommation électrique au dispositif intermédiaire (11),
- arrêt (46) par le dispositif intermédiaire (11) de la mesure de données de consommation électrique,
- calcul (47) de la consommation électrique de l'appareil à partir des données de mesure horodatées et stockées.

12. Procédé d'obtention de données de consommation minimale permanente mis en oeuvre par un système selon l'une quelconque des revendications 1 à 9, comprenant des étapes de :
- calcul et horodatage (51) par les moyens de traitement de données du dispositif intermédiaire (12) de moyennes de la puissance apparente, chaque moyenne étant réalisée sur plusieurs points de mesure consécutifs correspondant à une première période temporelle,
- sélection (52) par les moyens de traitement de données du dispositif intermédiaire (12) de minima, chaque minimum étant sélectionné parmi des moyennes de la puissance apparente calculées et horodatées dont les premières périodes temporelles correspondantes sont comprises dans une deuxième période temporelle,
- obtention (53) d'une consommation minimale permanente par calcul d'une moyenne des minima sélectionnés,
- affichage (54) des données transmises sur le terminal mobile (12).

## Patentansprüche

1. Präsentationssystem von Daten, die aus einem kommunizierenden Stromzähler (10) stammen, der Energieverbrauchsdaten ermittelt, wobei das System ein mobiles Endgerät (12) und eine Vermittlungsvorrichtung (11) umfasst, umfassend physikalische Verbindungsmittel (111) mit dem kommunizierenden Stromzähler, und, in einem Gehäuse (110) angeordnet:
- eine erste Kommunikationsschnittstelle, die derart konfiguriert ist, dass die Vermittlungsvorrichtung (11) über die physikalischen Verbindungsmittel (111) die von dem kommunizierenden Stromzähler (10) ermittelten Energieverbrauchsdaten automatisch abholt,
- Zeitstempelmittel der Daten,
- Speichermittel (112) der zeitgestempelten Daten,
- eine zweite Kommunikationsschnittstelle, die imstande ist, eine lokale drahtlose Kommunikation mit dem mobilen Endgerät (12) durchzuführen,
- einen Prozessor, der konfiguriert ist, damit die Vorrichtung (11) alle oder einen Teil der zeitgestempelten Daten an das mobile Endgerät (12) über die zweite Kommunikationsschnittstelle auf Anforderung des mobilen Endgeräts (12) überträgt,
**dadurch gekennzeichnet, dass** die Vermittlungsvorrichtung (11) ferner Stromverbrauchsdaten-Verarbeitungsmittel aufweist, die konfiguriert sind, um auf der Basis der zeitgestempelten Daten angereicherte Daten zu ermitteln, wobei die angereicherten Daten minimale permanente Verbrauchsdaten umfassen, wobei der Prozessor ebenfalls konfiguriert ist, damit die Vermittlungsvorrichtung (11) alle oder einen Teil der angereicherten Daten an das mobile Endgerät (12) überträgt.

2. System nach Anspruch 1, **dadurch gekennzeichnet, dass** die Vermittlungsvorrichtung (11) mit dem kommunizierenden Stromzähler (10) über die physikalischen Verbindungsmittel (111) elektrisch versorgt wird.

3. System nach einem der vorangehenden Ansprüche, **dadurch gekennzeichnet, dass** die Verbindungsmittel (111) eine physikalische Anschlusstechnik im Format USB umfassen.

4. System nach einem der Ansprüche 1 oder 2, **dadurch gekennzeichnet, dass** die Verbindungsmittel (111) einen drahtgebundenen Anschluss umfassen.

5. System nach vorangehendem Anspruch, wobei die zeitgestempelten Daten und die angereicherten Daten umfassen:
- Daten einer Momentanleistung und/oder einer Interpolation der Momentanleistung in einer homogenen Einheit in eine monetäre, durch eine Zeiteinheit geteilte Einheit,
- Verbrauchsdaten über ein Zeitintervall in einer monetären Einheit und/oder in einer Energiemessungseinheit,
- Verbrauchsvergleiche gemäß mehreren Zeitintervallen.

6. System nach einem der vorangehenden Ansprüche, wobei die lokale drahtlose Kommunikation zwischen der Vermittlungsvorrichtung (11) und dem mobilen Endgerät (12) mittels Bluetooth- oder Bluetooth Low Energy-Protokoll durchgeführt wird.

7. System nach einem der vorangehenden Ansprüche, wobei die lokale drahtlose Kommunikation zwischen der Vermittlungsvorrichtung (11) und dem mobilen Endgerät (12) mittels WLAN-Protokoll oder WLAN direkt durchgeführt wird.

8. System nach einem der vorangehenden Ansprüche, wobei das mobile Endgerät (12) ein Mobiltelefon oder ein digitales Tablet ist, einen Bildschirm (121) umfasst und eine Softwareapplikation integriert, die konfiguriert ist, um mit der Vermittlungsvorrichtung (11) zu kommunizieren und Daten aus der Vermittlungsvorrichtung (11) zu präsentieren.

9. System nach dem vorangehenden Anspruch, wobei die Datenanforderungen des mobilen Endgeräts (12) an die Vermittlungsvorrichtung (11) von Daten abhängen, die von der Softwareanwendung auf dem Bildschirm (121) des mobilen Endgeräts (12) im Moment der Sendung der Anforderungen zu präsentieren sind.

10. Präsentationsverfahren auf einem mobilen Endgerät (12) von Daten, die aus einem kommunizierenden Stromzähler (10) stammen, der Energieverbrauchsdaten ermittelt, umfassend die folgenden Schritte:
- Datenanfordern an eine Vermittlungsvorrichtung (11) von einem System nach einem der vorangehenden Ansprüche durch das mobile Endgerät (12),
- Abholen durch den Prozessor von von den Speichermitteln (112) gespeicherten Daten,
- Übertragen von Daten durch die zweite Kommunikationsschnittstelle über eine lokale drahtlose Kommunikation,
- Anzeigen der übertragenen Daten auf dem mobilen Endgerät (12).

11. Messverfahren eines Stromverbrauchs eines Geräts, durchgeführt von einem System nach einem der Ansprüche 1 bis 9, umfassend die folgenden Schritte:
- Senden (41), durch das mobile Endgerät (12), einer Startanforderung einer Stromverbrauchsmessung an die Vermittlungsvorrichtung (11),
- Starten (42), durch die Vermittlungsvorrichtung (11), einer Stromverbrauchsdatenmessung, wobei die gemessenen Daten von dem Zeitstempelmitteln zeitgestempelt und von den Speichermitteln (112) gespeichert werden,
- Anzeigen (43), auf dem mobilen Endgerät (12), einer Aktivierungsanforderung des Geräts,
- Anzeigen (44), auf dem mobilen Endgerät (12), einer Ausschaltanforderung des Geräts,
- Senden (45), durch das mobile Endgerät (12), einer Beendigungsanforderung einer Stromverbrauchsmessung an die Vermittlungsvorrichtung (11),
- Stoppen (46), durch die Vermittlungsvorrichtung (11), der Stromverbrauchsdatenmessung,
- Berechnen (47) des Stromverbrauchs des Geräts auf der Basis von zeitgestempelten und gespeicherten Messdaten.

12. Verfahren für den Erhalt von minimalen permanenten Verbrauchsdaten, durchgeführt von einem System nach einem der Ansprüche 1 bis 9, das die folgenden Schritte umfasst:
- Berechnen und Zeitstempeln (51), durch die Datenverarbeitungsmittel der Vermittlungsvorrichtung (12), von Mittelwerten der Scheinleistung, wobei jeder Mittelwert an mehreren aufeinanderfolgenden Messpunkten ermittelt wird, die einer ersten Zeitperiode entsprechend,
- Auswählen (52), durch die Datenverarbeitungsmittel der Vermittlungsvorrichtung (12), von Minima, wobei jedes Minimum aus den berechneten und zeitgestempelten Mittelwerten der Scheinleistung ausgewählt wird, deren entsprechende erste Zeitperioden in einer zweiten Zeitperiode enthalten sind,
- Erhalten (53) eines minimalen permanenten Verbrauchs durch Berechnen eines Mittelwerts der ausgewählten Minima,
- Anzeigen (54) der übertragenen Daten auf dem mobilen Endgerät (12).

## Claims

1. A system for displaying data from a communicating electricity meter (10) elaborating energy consumption data, the system comprising a mobile terminal (12) and an intermediate device (11) comprising means (111) for physical connection to the communicating electricity meter and, positioned in a casing (110):
- a first communication interface configured so that the intermediate device (11) automatically recovers via the physical connection means (111) the energy consumption data elaborated by the communicating electricity meter (10),
- means for time-stamping said data,
- means (112) for storing said time-stamped data,
- a second communication interface able to implement a local wireless communication with the mobile terminal (12),
- a processor configured so that the device (11) transmits all or part of the time-stamped data to the mobile terminal (12) via the second communication interface on request from the mobile terminal (12),
**characterized in that** the intermediate device (11) further includes means for processing energy consumption data configured so as to elaborate data enriched from the time-stamped data, the enriched data comprising permanent minimum consumption data, the processor being also configured so that the intermediate device (11) transmits all or part of the enriched data to the mobile terminal (12).

2. The system according to claim 1, **characterized in that** the intermediate device (11) is electrically powered via the means for physical connection (111) to the communicating electricity meter (10).

3. The system according to any one of the preceding claims, **characterized in that** the connection means (111) comprise a physical connection in USB format.

4. The system according to one of claims 1 or 2, **characterized in that** the connection means (111) comprise a wired connection.

5. The system according to any one of the preceding claims, wherein the timer-stamped data and the enriched data comprise:
- instantaneous power data, and/or an interpolation of the instantaneous power in a unit homogeneous to a monetary unit divided by a unit of time,
- consumption data on a time interval in a monetary unit and/or in an energy measurement unit,
- consumption comparisons according to several time intervals.

6. The system according to any one of the preceding claims, wherein the local wireless communication between the intermediate device (11) and the mobile terminal (12) is carried out with the Bluetooth or Bluetooth Low Energy protocol.

7. The system according to any one of the preceding claims, wherein the wireless local communication between the intermediate device (11) and the mobile terminal (12) is carried out with the Wi-Fi or direct Wi-Fi protocol.

8. The system according to any one of the preceding claims, wherein the mobile terminal (12) is a mobile telephone or a digital tablet, comprises a screen (121) and integrates a software application configured for communicating with the intermediate device (11) and displaying the data from the intermediate device (11).

9. The system according to the preceding claim, wherein the data requests from the mobile terminal (12) to the intermediate device (11) depend on the data to be displayed by the software application on the screen (121) of the mobile terminal (12) upon emitting the requests.

10. A method for displaying on a mobile terminal (12) data from a communicating electricity meter (10) elaborating energy consumption data, comprising steps of:
- requesting data to an intermediate device (11) of a system according to any one of the preceding claims, by the mobile terminal (12),
- recovering with the processor data stored by the storage means (112),
- transmitting data through the second communication interface via a wireless local communication,
- displaying the transmitted data on the mobile terminal (12).

11. A method for measuring electric consumption of an apparatus implemented by a system according to any one of claims 1 to 9, comprising steps of:
- sending (41) by the mobile terminal (12) a request for launching an electric consumption measurement to the intermediate device (11),
- launching (42) by the intermediate device (11) an electric consumption data measurement, the measured data being time-stamped by the time-stamping means and stored by the storage means (112),
- displaying (43) on the mobile terminal (12) a request for activating the apparatus,
- displaying (44) on the mobile terminal (12) a request for switching off the apparatus,
- sending (45) by the mobile terminal (12) a request for terminating the electric consumption measurement to the intermediate device (11),
- stopping (46) by the intermediate device (11) the electric consumption data measurement,
- calculating (47) the electric consumption of the apparatus from the time-stamped and stored measurement data.

12. A method for obtaining permanent minimum consumption data implemented by a system according to any one of claims 1 to 9, comprising the steps of:
- calculating and time-stamping (51) by the data processing means of the intermediate device (12) averages of the apparent power, each average being performed on several consecutive measurement points corresponding to a first time period,
- selecting (52) with the data processing means of the intermediate device (12) minima, each minimum being selected from among calculated and time-stamped averages of the apparent power for which the first corresponding time periods are comprised in a second time period,
- obtaining (53) a permanent minimum consumption by calculating an average of the selected minima,
- displaying (54) the transmitted data on the mobile terminal (12).
